**Europäisches Patentamt**

**European Patent Office**

**Office européen des brevets**

(11) Numéro de publication: **0 043 810**
**B1**

(12) **FASCICULE DE BREVET EUROPEEN**

(45) Date de publication du fascicule du brevet:
17.04.85

(51) Int. Cl.⁴: **G 01 M 11/06, G 01 J 1/42**

(21) Numéro de dépôt **81870024.7**

(22) Date de dépôt: **22.05.81**

(54) Contrôleur électronique de faisceaux lumineux.

(30) Priorité **27.06.80 BE 884052**

(43) Date de publication de la demande:
**13.01.82 Bulletin 82/2**

(45) Mention de la délivrance du brevet:
**17.04.85 Bulletin 85/16**

(84) Etats contractants désignés:
**AT BE CH DE FR GB IT LI LU NL SE**

(56) Documents cités:
**BE - A - 807 541**
**DE - A - 2 239 959**
**FR - A - 2 295 410**
**FR - A - 2 306 443**
**US - A - 3 515 483**
**US - A - 3 532 432**
**US - A - 4 134 680**

**Le dossier contient des informations techniques présentées postérieurement au dépôt de la demande et ne figurant pas dans le présent fascicule.**

(73) Titulaire: **FONDS D'ETUDES POUR LA SECURITE ROUTIERE (A.S.B.L., Chaussee de Haecht 1405, B-1130 Bruxelles (BE)**

(72) Inventeur: **de Brabander, Louis, Oppemlaan 162, B-1970 Wezembeek Oppem (BE)**
Inventeur: **van Linthout, Luc, Heilige Geeststraat 82, B-3000 Leuven (BE)**

BUNDESDRUCKEREI BERLIN

## Description

La présente invention concerne un appareil opto-électronique qui permet de contrôler ou de mesurer directement, sans calculs ou corrections supplémentaires, l'orientation de faisceaux lumineux et leur intensité lumineuse dans une ou plusieurs directions caractéristiques en plaçant l'appareil à une distance quelconque à proximité devant l'émetteur du faisceau lumineux.

Une des diverses applications de l'invention est constituée par la mesure ou le contrôle de l'orientation et de l'intensité lumineuse des projecteurs ou des feux de signalisation fixés ou montés sur des véhicules.

La méthode classique pour déterminer l'orientation d'un faisceau lumineux est d'en observer la forme et la position sur un écran placé à grande distance devant l'émetteur. L'intensité lumineuse I (en candelas) dans une direction données peut être calculée à partir de l'éclairement E (en lux) sur l'écran à l'endroit qui correspond à cette direction par:

$$I = E \cdot R^2$$

où R (en mètres) est la distance de l'écran par rapport à l'émetteur.

Pour rendre ces opérations plus pratiques, on connaît à l'heure actuelle des appareils constitués d'une optique convergente qui forme sur un écran, placé au voisinage du plan focal, l'image du faisceau lumineux similaire à l'image obtenue sur un écran à grande distance.

En particulier, de tels appareils optiques destinés aux projecteurs automobiles ont été normalisés dans plusieurs pays, entre autres en Belgique (Norme NBN 612).

L'intensité I de la source lumineuse dans une direction déterminée est alors données en fonction de l'éclairement E du point correspondant de l'écran par:

$$I = E \cdot F^2$$

où F (en mètres) est la distance focale de l'optique.

Un transducteur photo-électrique placé sur l'écran permet donc de mesurer l'intensité lumineuse dans la direction correspondante, la mesure étant indépendante de la distance à l'émetteur pour autant que tous les rayons émanant de l'émetteur dans cette direction soient captés par l'optique.

En plaçant plusieurs transducteurs photo-électriques sur l'écran, la comparaison d'intensités lumineuses dans des directions différentes devient possible, ce qui permet de mesurer l'orientation d'un faisceau lumineux. Les comparaisons connues jusqu'ici sont les suivantes (cfr. brevets DE-A-2 239 959, US-A-4 134 680, US-A-3 515 483, FR-A-2 306 443):

- pour des faisceaux lumineux symétriques par rapport à deux plans perpendiculaires (dont l'intersection constitue l'axe du faisceau): quatre cellules photo-électriques, une dans chaque quadrant, peuvent être placées sur un écran mobile par rapport au faisceau (ou sur un écran fixe par rapport au faisceau réfléchi à l'aide d'un miroir mobile par exemple). La recherche de l'équilibre entre les courants électriques fournis par les quatre cellules à l'aide de détecteurs de zéro permet ainsi de mesurer l'orientation du faisceau.

- Pour des faisceaux qui présentent une variation rapide de l'intensité lumineuse au voisinage d'un lieu géométrique que nous appelerons »coupure«, des cellules photo-électriques peuvent être placées au voisinage de cette coupure et:
  - soit la différence d'éclairement entre ces cellules est mesurée,
  - soit les éclairements de deux cellules ainsi prositionnées sont comparés à une équation linéaire

$$I_2 = aI_1 + b$$

où $I_1$ et $I_2$ sont les intensités lumineuses dans les directions 1 et 2 correspondantes, a et b étant des coefficients préétablis, finis et non nuls.

Ces réalisations souffrent principalement des inconvénients suivants:

- ou bien elles exigent que l'opérateur effectue une mesure et ne permettent pas d'afficher directement et clairement si l'orientation du faisceau est dans les tolérances ou pas,
- ou bien elles donnent un résultat qui dépend non seulement de l'orientation du faisceau lumineux mais aussi des valeurs absolues des intensités lumineuses, valeurs qui, dans la pratique, sont souvent variables ne fut-ce que par les variations de tensions d'alimentation des lampes.

Une autre méthode connue s'appliquer aux projecteurs automobiles pour autant que les faisceaux lumineux aient une forme connue à priori, à savoir, soit le faisceau de route, soit le faisceau de croisement de type européen dont la coupure présente un angle de 15°, soit le faisceau de brouillard de type européen (cf. brevet DE-A-2 239 959). Elle consiste à disposer sur l'écran plusieurs rangées verticales de cellules photo-électriques et à comparer leurs éclairements et la moyenne d'éclairement par rangée à l'éclairement maximal obtenu sur une des cellules. Ainsi, par classification des valeurs obtenues, normées par rapport à ce maximum, il est possible, à l'aide de circuits logiques, de différencier les trois types de faisceaux lumineux retenus et de vérifier si leur inclinaison se situe dans des tolérances pré-établies.

Un des inconvénients de cette méthode est qu'elle n'est utilisable que pour les faisceaux lumineux dont la forme est connue d'avance et non pour des faisceaux lumineux d'autres formes qui ont la même fonction; par exemple dans le cas des projecteurs automobiles de type américain ou dans le cas de faisceaux de croisement de type européen dont la coupure présente un angle inférieur à 15° ou nul ou dont la coupure est dite »décalée«.

Toutes ces méthodes de comparaison ne permettent donc pas de vérifier si la forme d'un faisceau lumineux est satisfaisante, cette forme pouvant être insatisfaisante aussi bien par des défauts de fabrication que par des déformations dues à l'usage.

Or, depuis longtemps, le besoin s'est senti de mesurer ou de contrôler la forme et l'orientation précise de faisceaux lumineux divers de manière directe et simple à pratiquer.

L'exemple le plus répandu est celui des projecteurs automobiles et plus précisément celui des feux-route et des feux-croisement.

En effet, selon la Convention de Vienne de 1968 sur la Circulation Routière:

- les feux-route doivent être capables d'éclairer efficacement la route jusqu'à 100 m au moins en avant du véhicule,
- les feux-croisement doivent être capables d'éclairer efficacement la route jusqu'à 40 m au moins en avant du véhicule, sans éblouir ni gêner indûment les conducteurs venant en sens inverse ni les autres usagers de la route.

C'est pourquoi des normes ont été établies:

- pour les projecteurs dits »américains«: des normes SAE,
- pour les projecteurs dits »européens«: des Règlements annexés à l'Accord de Genève de 1958 concernant l'adoption de Conditions uniformes d'Homologation des Equipements des Véhicules à Moteurs.

Ces normes prescrivent des intensités lumineuses minimales dans les directions à éclairer et des intensités lumineuses maximales dans les directions où l'éblouissement est à craindre, intensités à mesurer dans des conditions de laboratoire bien précises, lors des essais d'homologation sur les prototypes de projecteurs.

Ces mesures ne sont jusqu'ici pas réalisables sur les véhicules, faute principalement d'instruments adéquats. Ces instruments doivent en effet être adaptés aux conditions pratiques de travail telle que, par exemple, celles des stations d'inspection automobile.

En conséquence, un des buts de la présente invention est de prévoir un appareil de mesure et de contrôle des projecteurs sur les véhicules automobiles qui permette de constater immédiatement si un projecteur satisfait ou non aux conditions imposées, étant entendu que l'application n'est pas limitée à ce cas spécifique.

Pour celà, l'invention comprend un dispositif comme décrit dans la revendication 1. Des modes particuliers de réalisation de l'invention sont décrits dans les revendications 2 à 4.

La présente invention hérite de tous les avantages des candelamètres-comparateurs tels que décrits dans le brevet BE-A-807 541 et apporte les aventages nouveaux suivants:

- les rapports des intensités ne dépendent pas de la tension d'alimentation des projecteurs controlés puisque pour un projecteur donné, les intensités dans les différentes directions varient tous proportionnellement,
- les rapports des intensités sont indépendants aussi de la couleur;
dès lors, une correction spectrale est superflue, sauf dans le cas où des mesures absolues et précises des intensités lumineuses seraient nécessaires pour des projecteurs dont le spectre lumineux n'est pas connu.

D'autres objets et caractéristiques de la présente invention apparaîtront plus clairement à partir de la description détaillée suivante faite en relation avec les dessins joints dans lesquels sont représentées, à titre d'exemple, des réalisations particulières de l'invention.

Cet exemple concerne le contrôle et la mesure du faisceau-route et du faisceau-croisement des projecteurs automobiles.

La figure 1 montre, par rapport à une voie de circulation de 3 m de large, les bords des zones d'éclairement intense pour des feux-croisement européens (E) et américains (SAE) placés à 0,75 m au-dessus du sol au centre de la voie.

La figure 2 montre une sélection de dix directions 1 à 10 caractéristique relatives aux conditions imposées feux-route et aux feux-croisement concernant soit les tolérances en direction, soit les intensités lumineuses.

La figure 3 montre un lieu iso-candela d'un feu-route désaxé à la limite des tolérances.

La figure 4 montre un exemple de bloc-schéma électronique du dispositif.

Ce schéma comprend:

| | |
|---|---|
| des transducteurs photoélectriques: | 1 à 10 |
| des amplificateurs: | A |
| des diviseurs de tension: | $^{3}/_{4}$, $^{1}/_{8}$, a à h |
| des détecteurs de maximum: | D |
| des comparateurs: | C |
| dont 4 avec hysteresis: | $I_0$ |
| un indicateur d'intensité: | Intensity |
| cinq indicateurs témoins: | direction. |

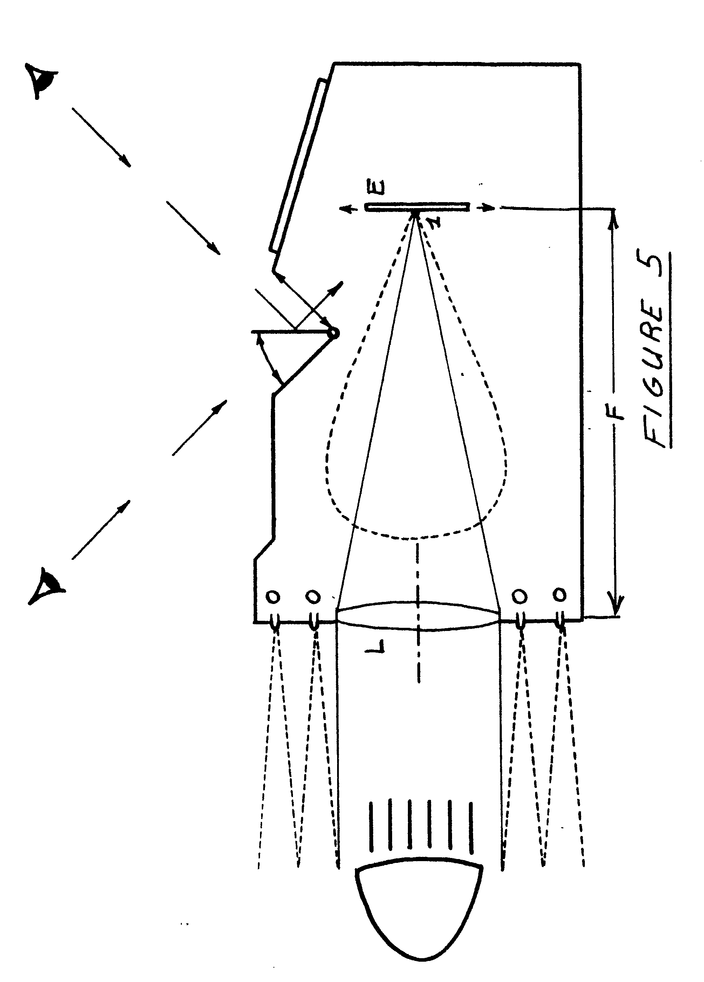

La figure 5 montre une coupe d'un bloc optique comprenant une optique (L), l'écran (E) à une distance focale (F) de l'optique, un transducteur photoélectrique (1) ainsi que des capteurs optiques (0) autour de l'optique, la directivité optimale du transducteur (1) et des capteurs (0) étant indiquée par une coupe dans leur diagramme de directivité dessinée en pointillé.

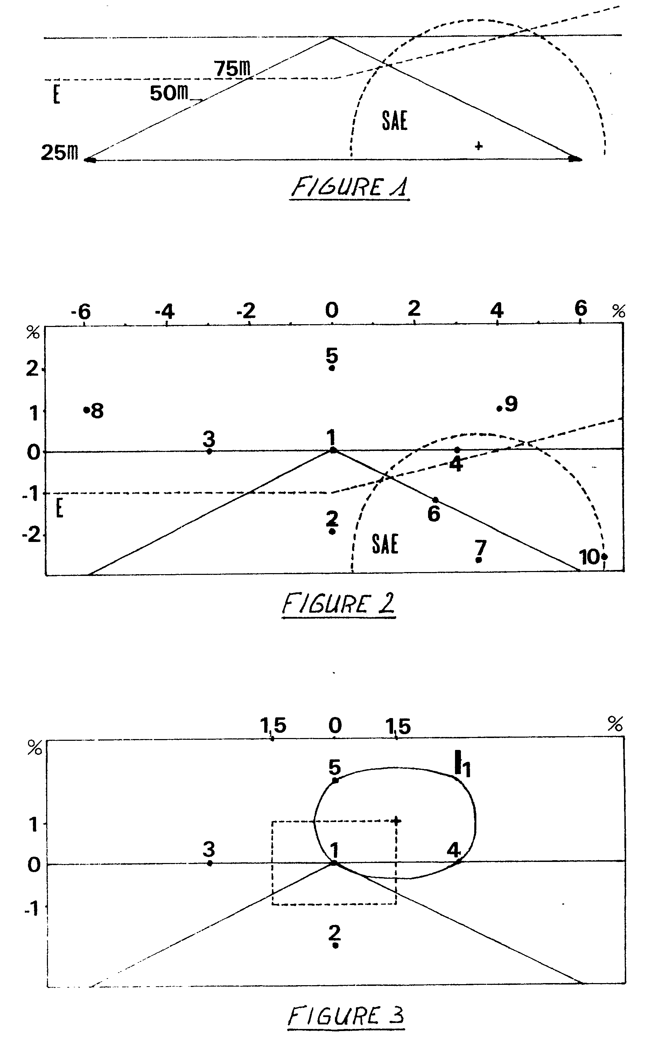

Les normes prévoient pour le feu-route un faisceau centré sur la direction 1 des figures 1, 2 et 3. Toutefois, une tolérance est accordée sur cette direction qui, par exemple en Belgique, est limitée:

à un écart de 1% en inclinaison
à un écart de 1,5% latéralement.

La zone de tolérance sur l'axe est indiquée par un rectangle pointillé sur la figure 3.

Les directions 2, 3, 4 et 5 indiquées sur la figure 3 sont situées à un écart double de la tolérance.

Ainsi, en imposant comme critères pour les intensités I, les directions étant indiquées comme indices:

$$I_1 \geq I_2$$
$$I_1 \geq I_3$$
$$I_1 \geq I_4$$
$$I_1 \geq I_5$$

on vérifie si le lieu iso-candela passant par la direction 1 n'englobe pas une des directions 2 à 5.

Dans les cas limites, le centre de ce lieu s'écarte de la direction 1 d'une distance égale à la tolérance. C'est le cas de l'exemple réprésenté par la figure 3.

Pour les faisceaux-croisement, cinq directions caractéristiques supplémentaires sont indiquées sur la figure 2:

— la direction 6 qui est le centre de la zone dans laquelle sont exigées les intensités les plus grandes pour les feux européens,
— la direction 7 qui est le centre équivalent pour les feux américains,
— la direction 8 est celle dans laquelle la plus faible intensité est exigée pour les feux européens,
— la direction 9 qui, avec les directions 1 et 3, se situe à 1% d'inclinaison au-dessus de la position idéale de la coupure des feux européens,
— la direction 10 qui se situe à 3% d'écart à droite de la direction 7.

Des normes européennes et américaines concernant les intensités minima et maxima, on peut déduire les conditions suivantes couvrant ces différentes normes à la fois:

$$I_2 \geq 8I_8$$
$$\text{Max}(I_6, I_7) \geq \text{Max}(6I_1, 8I_3, 6I_9)$$

De plus, tolérant un écart latéral d'environ 1,5%, il vient comme pour les faisceaux-route:

$$\text{Max}(I_6, I_7) \geq I_2$$
$$I_7 \geq I_{10}$$

Ces conditions étant trop sévères dans la pratique, il y a lieu d'introduire un seuil de protection $I_0$ contre l'éclairage ambiant et des coefficients de sévérité a, b ... h inférieurs à l'unité. Les critères deviennent alors:

— pour les faisceaux-route:
$$I_1 \geq aI_2 + I_0$$
$$I_1 \geq bI_3 + I_0$$
$$I_1 \geq cI_4 + I_0$$
$$I_1 \geq dI_5 + I_0$$
— pour les faisceaux-croisement:
$$\tfrac{1}{8} I_2 \geq e(I_8)$$
$$\tfrac{1}{8} \text{Max}(I_6, I_7) \geq f \text{Max}(\tfrac{3}{4} I_1, I_3, \tfrac{3}{4} I_9)$$
$$\text{Max}(I_6, I_7) \geq g I_2$$
$$I_7 \geq h I_{10}$$

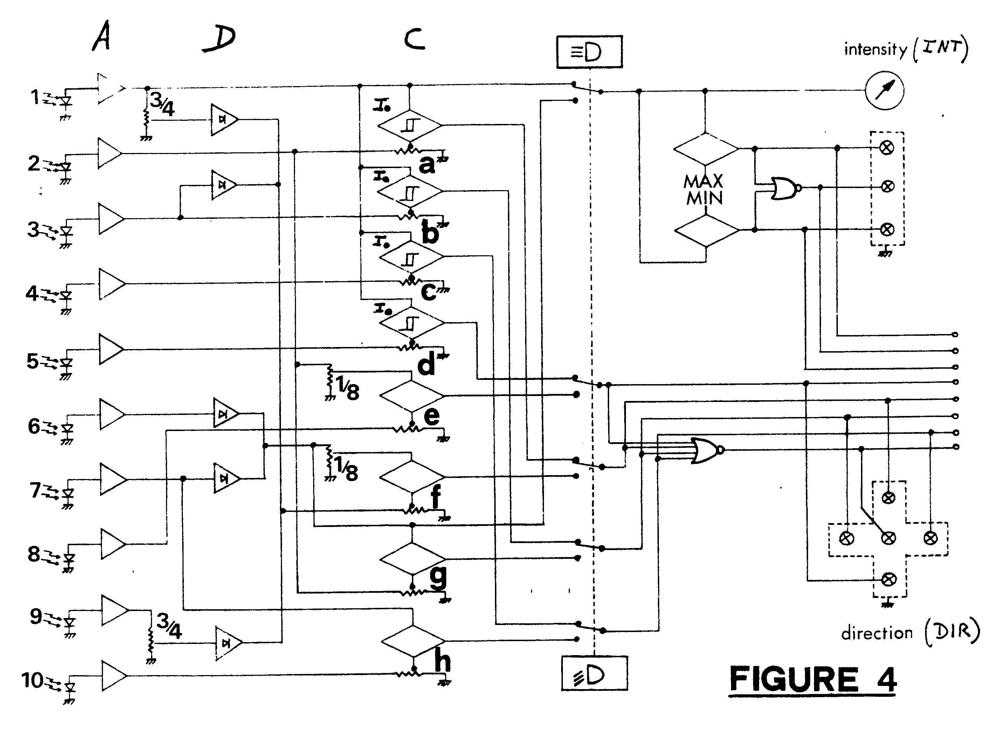

Ces critères vérifiés électroniquement d'une manière relativement simple par le montage de la figure 4 par exemple. Dix transducteurs photoélectriques sont situés sur l'écran aux endroits qui correspondent aux directions 1 à 10 et fournissent au travers de leurs amplificateurs associés des tensions proportionnelles aux intensités lumineuses $I_1$ à $I_{10}$.

Les sorties des amplificateurs 1 à 5 sont appliquées au travers des diviseurs de tension a, b, c, d à des comparateurs à hystérésis dont le seuil d'inversion est ajusté sur la valeur $I_0$. Ainsi quatre résultats digitaux sont obtenus qui indiquent si les critères sont satisfaits ou non pour les faisceaux-route.

Pour les faisceaux-croisement, le traitement est analogue, si ce n'est que les quatre comparateurs sont sans hystérésis et que deux sous-ensembles $(I_6, I_7)$ et $(\tfrac{3}{4} I_1, I_3, \tfrac{3}{4} I_9)$ passent d'abord par des détecteurs de maximum.

Les valeurs $\tfrac{3}{4} I_1$ et $\tfrac{3}{4} I_9$ sont obtenues par des diviseurs de tension $\tfrac{3}{4}$ et la comparaison se fait à l'aide de deux diviseurs de tension $\tfrac{1}{8}$ et quatre autres e, f, g et h.

L'exploitation peut se faire de différentes manières. Ainsi par exemple sur la figure 4 selon la position de l'inverseur »feu-route, feu-croisement«, soit $I_1$ soit $\text{Max}(I_6, I_7)$ est indiquée sur un instrument de lecture et ces valeurs sont comparées aux limites minima et maxima réglementaires par deux comparteurs qui allument des lampes témoins. Une porte NOR allume une troisième lampe témoin si la valeur se situe entre les limites.

Les sorties des comparateurs qui contrôlent s'il est satisfait ou non aux critères relatifs à la direction sont également appliquées à quatre lampes témoins et à une porte NOR avec lampe témoin. Ces cinq lampes témoins peuvent être disposées sur le tableau de contrôle de manière à indiquer clairement le sens dans lequel le faisceau lumineux s'écarte de la direction idéale.

Les différentes sorties logiques peuvent être utilisées également pour l'enregistrement ou le stockage et le traitement par un ordinateur, pour établir des statistiques par exemple.

L'exploitation peut aussi se faire inversément en augmentant les paramètres a, b ... h jusqu'à ce qu'il ne soit plus possible de satisfaire aux critères pour une seule orientation du projecteur. Dès lors, l'indication du déplacement de l'écran ou de la rotation du bloc optique permet une mesure précise de l'orientation du projecteur.

Une autre application particulière est possible pour le cas des feux-croisement européens: la hauteur pour laquelle on obtient

$$\text{Max } (I_6, I_7) = f \text{ Max } (^3/_4\, I_1, I_3, {}^3/_4\, I_9)$$

constitue en effet une mesure de la hauteur de la coupure selon la norme ISO 4182, cette équation constituant en fait une définition de la position d'une coupure conventionnelle pour une valeur f donnée. Une telle définition est d'autant plus valable qu'aucune définition absolue de cette position de coupure n'a pu être trouvée jusqu'ici.

Pour augmenter la facilité d'utilisation de l'appareil, il est intéressant de pouvoir observer l'écran pendant les mesures ou les contrôles aussi bien à partir de l'arrière que de l'avant de l'appareil. Il est alors nécessaire de prévoir une fenêtre d'observation dans le bloc optique avec miroir ajustable comme indiqué sur la coupe présentée à la figure 5.

Pour centrer facilement le bloc optique sur le projecteur des capteurs optiques sont placés autour de l'optique d'entrée dont la directivité est telle que les zones sensibles se touchent environ à la distance normale du projecteur mesuré. Le dispositif le plus simple est composée de fibres optiques à tête optique bien choisie, comme indiqué à la figure 5, l'autre extrémité aboutissant sur le tableau de contrôle selon une disposition géométrique qui correspond à l'emplacement autour de l'optique. Ainsi l'opérateur peut facilement contrôler la position relative du bloc optique devant le projecteur, sans que ce dernier soit directement visible.

## Revendications

1. Dispositif destiné au contrôle de faisceaux lumineux émis par un émetteur, en ce qui concerne leur orientation par rapport à un axe de référence passant par le centre de l'émetteur, leur forme et leurs intensités lumineuses, constitué:

— d'un écran (E) placé dans un plan perpendiculaire à l'axe de référence, de manière que l'éclairement de chaque point de l'écran soit proportionnel à l'intensité lumineuse de l'émetteur dans la direction correspondante,
— de moyens de positionnement de cet écran (E), par translation dans son plan, qui permettent de faire traverser son centre (1) par l'axe de référence,
— de transducteurs photoélectriques (1 à 10) situés sur cet écran sur des points qui correspondent à des directions caractéristique (1 à 10) par rapport à l'axe de référence.

— d'amplificateurs (A) ou de diviseurs de tension ($^3/_4$, $^1/_8$, a à h), soit les deux à la fois, associés aux transducteurs photoélectriques qui fournissent des tensions de sortie selon des facteurs de proportionnalité étalonnés; ces tensions constituant ainsi chacune une mesure de l'intensité lumineuse de l'émetteur dans chaque direction caractéristique, lesdits amplificateurs et/ou diviseurs de tension étant ajustables ou réglables en modifiant le gain des amplificateurs et/ou des diviseurs de tension à l'aide de résistances variables ou de potentiomètres étalonnés,
— de comparateurs reliés auxdits tensions et fournissant des signaux digitaux à deux états, »oui« ou »non«,
— d'indicateurs d'intensité lumineuse (INT) actionnés par certaines de ces tensions de sortie ou par les plus grandes dans certains sous-ensembles d'entre elles,
— de dispositifs d'exploitations: enregistrement, traitement de donnés ou autres,

caractérisé en ce que:

— il comporte des filtres optiques qui sont placés devant lesdits transducteurs photoélectriques (1 à 10) pour rendre leur sensibilité spectrale similaire à celle de l'oeil humain dans les cas où le spectre de l'émetteur n'est pas connu d'avance,
— lesdits directions sont celles dans lesquelles des conditions d'intensité lumineuse sont imposées,
— lesdits comparateurs comparent les proportions entre les valeurs desdites tensions de sortie et les valeurs les plus grandes de certains sous-ensembles d'entre elles,
— lesdits signeux digitaux expriment, d'une part si les conditions imposées aux rapports entre les intensités lumineuses dans lesdits directions caractéristiques sont satisfaites et actionnent, d'autre part des indicateurs (DIR) qui affichent directement le résultat desdites comparaisons et/ou sont transmis vers lesdits dispositifs d'exploitation.

2. Dispositif selon la revendication 1, caractérisé en ce que:

— l'écran (E) est monté dans un bloc optique placé devant l'émetteur du faisceau lumineux, l'entrée de ce bloc optique étant constituée d'une optique convergente (L) à distance focale (F) devant l'écran (E), pour y réaliser une image similaire à celle obtenue sur un écran à grande distance, l'éclairement de chaque point de l'écran étant proportionnel à l'intensité lumineuse de l'émetteur dans la direction des rayons lumineux parallèles qui sont focalisés dans ce point,
— le positionnement de l'écran (E) par rapport à l'axe de référence s'effectuant soit par sa translation dans le plan focal de l'optique (L), soit par rotation du bloc optique, soit par combinaison de ces deux possibilités.

3. Dispositifs selon la revendication 2, caractérisés en ce que la translation de l'écran (E) ou la rotation du bloc optique est indiquée par rapport à une échelle de mesure pour permettre:

— soit de mesurer l'orientation du faisceaux lumineux par les positions où le signal digital d'un ou de plusieurs comparateurs (c) culbute d'un état à l'autre,
— soit inversément de régler l'orientation du faisceau lumineux pour obtenir cette culbute sur une position pré-établie.

4. Dispositif selon la revendication 2, où ledit bloc optique est monté sur un chariot mobile qui permet de le déplacer sans altérer sa direction et est complété par un dispositif de centrage devant l'émetteur, constitué:

— de capteurs optiques (O) situés autour de l'optique (L) et
— d'une transmission à partir de ces capteurs:
  — soit vers des indicateurs qui indiquent les quantités de lumière captée par ces capteurs optiques (O),
  — soit vers un système de commande automatique du centrage du bloc optique,

ce centrage étant assuré en réduisant au maximum la lumière captée par ces capteurs optiques (O).

**Patentansprüche**

1. Vorrichtung zum Prüfen von durch ein Licht ausgestrahlten Lichbündeln bezüglich ihrer Ausrichtung im Verhältnis zu einer durch das Zentrum des Lichtes verlaufenden Bezugsachse, ihrer Form und ihrer Lichtstärken und zusammengesetzt aus:

— einem Bildschirm, der sich in einer senkrecht zur Bezugsachse stehenden Ebene befindet, so daß die Beleuchtungsstärke jedes Punktes auf dem Bildschirm proportional ist zu der Lichtstärke des Lichtes in der entsprechenden Richtung,
— Mitteln zur Positionierung des Bildschirms, die es durch Translation in seiner Ebene ermöglichen, die Bildschirmmitte so zu wählen, daß die Bezugsachse hindurch läuft,
— photoelektrischen Transduktoren (1 bis 10), die sich auf diesem Bildschirm an Stellen befinden, die den charakteristischen Richtungen (1 bis 10) entsprechen im Verhältnis zur Bezugsachse,
— Verstärkern (A) oder Spannungsteilern ($^3/_4$, $^1/_8$, a bis h), oder beiden zusammen, die an den photoelektrischen Transduktoren angeschlossen sind und Ausgangsspannungen liefern nach geeichten Verhältnisfaktoren;

jede Spannung druckt also für sich eine Messung der Lichtstärke des Lichtes in jeder charakteristischen Richtung aus, wobei genannte Verstärker und/oder Spannungsteiler einstellbar oder regulierbar sind, indem der Gewinn der Verstärker und/oder Spannungsteiler mit Hilfe von veränderlichen Widerständen oder geeichten Potentiometern geändert wird,

— Komparatoren, die mit genannten Spannungen verbunden sind und Digitalsignale mit zwei Ständen »ja« oder »nein« liefern,
— Lichtstärkeanzeigern (INT), die durch manche dieser Ausgangsspannungen oder durch die größten mancher ihrer Untermengen angetrieben werden,
— Verwertungsvorrichtungen: Datenaufzeichnung und -verarbeitung,

dadurch gekennzeichnet, daß:

— sie optische Filter enthält, die vor genannten photoelektrischen Transduktoren (1 bis 10) angebracht worden sind, um ihre relative spektrale Empfindlichkeit mit der des menschlichen Auges gleichzusetzen in den Fällen, in denen das Lichtspektrum nicht im voraus gekannt ist,
— genannte Richtungen diese sind, in denen Lichtstärkebedingungen auferlegt worden sind,
— genannte Komparatoren die Verhältnisse zwischen den Werten genannter Ausgangsspannungen und den größten Werten mancher ihrer Untermengen vergleichen,
— genannte Digitalsignale einerseits ausdrukken, ob die den Verhältnissen zwischen den Lichtstärken in genannten charakteristischen Richtungen auferlegten Bedingungen erfüllt sind und andererseits die Anzeiger (DIR) antreiben, die unmittelbar das Ergebnis genannter Vergleiche anzeigen und/oder nach genannten Verwertungsvorrichtungen weitergeleitet werden.

2. Vorrichtung nach Anspruch 1, dadurch gekennzeichnet daß:

— der Bildschirm (E) in einem vor dem Licht aufgestellten optischen Gehäuse montiert ist, wobei der Eingang dieses optischen Gehäuses aus einer in Brennweite (F) vor dem Bildschirm (E) montierten Sammellinse (L) besteht, mit der Absicht, ein Bild zu realisieren, das dem auf einem Fernbildschirm ähnlich ist, da die Beleuchtungsstärke des Lichtes in der Richtung der gleichlaufenden Lichtstrahle, die in diesem Punkt gebündelt werden,
— die Positionierung des Bildschirms (E) im Verhältnis zur Bezugsachse entweder durch seine Translation in der Brennebene der Linse, oder durch Drehung des optischen Gehäuses, oder durch eine Kombination beider Möglichkeiten geschieht.

3. Vorrichtungen nach Anspruch 2, dadurch gekennzeichnet, daß die Translation des Bildschirms (E) oder die Drehung des optischen Gehäuses in bezug auf eine Meßskala angezeigt wird, so daß:

— entweder die Ausrichtung des Lichtbündels durch die Positionen, in denen der Digitalsignal eines oder mehrerer Komparatoren (C) umkippt, gemessen werden kann,
— oder umgekehrt die Ausrichtung des Lichtbündels eingestellt werden kann, um dieses Umkippen in eine vorher festgesetzte Position zu bewirken.

4. Vorrichtung nach Anspruch 2, wobei genanntes optisches Gehäuse auf einem beweglichen Wagen montiert ist, der zuläßt, das Gehäuse zu verschieben ohne seine Richtung zu ändern und mit einer Zentriervorrichtung vor dem Licht versehen ist, die zusammengesetzt ist aus:

— optischen Sensoren (O) um die Linse (L) und
— einem Übertragungssystem ab diesen Sensoren:
    — entweder nach Anzeigern, die die Lichtmenge anzeigen, die durch diese optischen Sensoren (O) eingefangen wurde,
    — oder nach einem automatischen Antriebssystem für die Zentrierung des optischen Gehäuses

wobei die Zentrierung gesichert wird, indem das von den optischen Sensoren (O) eingefangene Licht maximal eingeschränkt wird.

**Claims**

1. Device intended to check light beams emitted by a light as to their orientation with regard to a reference-axis passing through the centre of the light, their form and their luminous intensities, comprising:

— a screen (E) placed in a plane perpendicular to the reference-axis such that the illuminance of each point on the screen is proportional to the luminous intensity of the light in the corresponding direction,
— means for positioning the screen (E), allowing by translation in its plane to make the reference-axis pass through the screen centre (1),
— photo-electric transducers (1 to 10) put on this screen on points corresponding with characteristic directions (1 to 10) in respect of the reference-axis,
— amplifiers (A) or voltage dividers ($^3/_4$, $^1/_8$, a to h) or both together connected to the photo-electric transducers which produce output voltages in accordance with calibrated proportionality factors; thus these voltages each express a measurement of the light's luminous intensity in each characteristic direction, said amplifiers and/or voltage dividers being adjustable or controllable by modifying the gain of the amplifiers and/or voltage dividers by means of calibrated and variable resistances or potentiometers,
— comparators connected to said voltages and producing digital signals having two positions »yes« or »no«,
— luminous intensity indicators (INT) operated by some of these output voltages or by the greatest of some subsets of them,
— means of exploitation: recording, data processing, etc,

characterized by the fact that:

— it contains optical filters located in front of said photo-electric transducers (1 to 10) in order to make their spectral luminous efficiency similar to that of the human eye in the cases that the light spectrum is not known beforehand,
— said directions are those in which luminous intensity conditions are imposed,
— said comparators compare the proportions between the values of said output voltages and the greatest values of some subsets,
— said digital signals on the one hand express if the conditions imposed on the proportions between the luminous intensities in said characteristic directions are satisfied and on the other hand operate indicators (DIR) which indicate directly the result of said comparisons and/or are transmitted to said means of exploitation.

2. Device according to claim 1, wherein:

— the screen (E) is mounted in an optical block located in front of the light; the entrance of this optical block consists of a converging lens (i) at focal distance (F) in front of the screen in order to realize an image which is similar to that obtained on a screen at great distance, whereby the illuminance of each point on the screen is proportional to the luminous intensity of the light in the direction of the parallel light rays which are focussed in this point,
— the positioning of the screen (E) in regard of the reference-axis is done either by its tranlation in the focal plane of the lens or by rotation of the optical block or by a combination of these two possibilities.

3. Devices according to claim 2, characterized by the fact that the translation of the screen (E) or the rotation of the optical block is indicated on measuring scale in order to permit:

— either the measurement of the light beam orientation by means of the positions where the digital signal of one or more comparators (C) tumbles from one position to another,

— for the aiming of the light beam orientation to obtain this tumbling on a pre-established position.

4. Device according to claim 2, wherein said optical block is mounted on a mobile wagon which permits its displacement without modifying its direction and is completed by a centring device in front of the light which consists of:

— optical receivers (O) around the lens (L) and
— a transmission from these receivers:
    — either towards indicators which indicate the quantity of light caught by these optical receivers (O),
    — or towards an automatic operating system for the centring of the optical block,

whereby the centring is realized by reducing the light caught by the optical receivers (O) as much as possible.

*FIGURE 1*

*FIGURE 2*

*FIGURE 3*

FIGURE 4

FIGURE 5